# EUROPÄISCHE PATENTSCHRIFT

(11) **EP 0 587 614 B1**
(45) Veröffentlichungstag und Bekanntmachung des Hinweises auf die Patenterteilung: **21.12.1994**
(21) Anmeldenummer: 92910711.8
(22) Anmeldetag: 22.05.1992
(51) Int. Cl.: F16H 61/00, F16H 61/02, B60K 41/22

(54) **VERFAHREN ZUR STEUERUNG EINES STUFENLOSEN KRAFTFAHRZEUGGETRIEBES**
PROCESS FOR CONTROLLING AN INFINITELY VARIABLE TRANSMISSION
PROCEDE POUR LA COMMANDE D'UNE TRANSMISSION A VARIATION CONTINUE D'UN VEHICULE AUTOMOBILE

(30) Priorität: 21.06.1991 DE 4120546
(43) Veröffentlichungstag der Anmeldung: 23.03.1994
(73) Patentinhaber: Dr.Ing.h.c. F. Porsche Aktiengesellschaft, 70435 Stuttgart (DE)
(72) Erfinder: PETERSMANN, Joseph, D-7251 Wimsheim (DE); SEIDEL, Willi, D-7147 Eberdingen-Hochdorf (DE); STEHLE, Heinz, D-7251 Weissach (DE); MÖLLERS, Werner, D-7135 Wiernsheim (DE); FRÖSCHKE, Uwe, D-7251 Wimsheim (DE)
(86) Internationale Anmeldenummer: EP9201156
(87) Internationale Veröffentlichungsnummer: WO9300532

(56) Entgegenhaltungen:
- EP-A- 0 306 216
- EP-A- 0 406 616
- EP-A- 0 421 202
- EP-A- 0 421 241
- JP-A- 2 035 261
- JP-A- 2 038 747
- US-A- 4 622 865
- US-A- 5 097 725
- PATENT ABSTRACTS OF JAPAN vol. 9, No. 92 (M-373)(1815) 20. April 1985 & JP A 59 217 050
- PATENT ABSTRACTS OF JAPAN vol. 13, No. 415 (M-870)(3763) 13. September 1989 & JP A 1 153 857

## Beschreibung

Die Erfindung betrifft ein Verfahren nach den Merkmalen des Anspruches 1.

Übliche Verfahren zur Steuerung stufenloser Kraftfahrzeuggetriebe stellen die Übersetzung des Getriebes über eine Steuerkennlinie selbsttätig wenigstens in Abhängigkeit von der Drosselklappenstellung und Motordrehzahl ein. Die Steuerkennlinie wird hierbei nach den folgenden Kriterien ausgelegt: Entweder soll sie eine möglichst ökonomische oder eine möglichst leistungsorientierte Fahrweise zulassen.

Hierzu ist es aus der JP-OS 59-217050 bekannt geworden, zur Steuerung eines stufenlosen Getriebes für Fahrzeuge das stufenlose Getrieb auf der Grundlage von Kennfeldern anzusteuern, die entsprechend einer Fahrsituation ausgewählt werden. Hierdurch wird erreicht, daß den Bedürfnissen des Fahrers nach verbrauchsgünstigem Fahren und Fahrleistungen Rechnung getragen werde.

Die in der Regel zum Antrieb des Kraftfahrzeugs eingesetzten Brennkraftmaschinen erlauben es jedoch nicht, beide Kriterien zugleich zu erfüllen. Deshalb kommt häufig nur ein Kompromiß zwischen beiden Extrema in Frage, da eine rein verbrauchsoptimierte Steuerkennlinie nicht genügend Sicherheitsreserven bei kritischen Verkehrssituationen bietet und bei einer leistungsoptimierten Steuerkennlinie der Kraftstoffverbrauch zu hoch ist.

Eine weitere Möglichkeit besteht in der manuellen Umschaltung zwischen einer verbrauchsoptimierten und einer leistungsoptimierten Steuerkennlinie. Bei dieser Lösung muß der Fahrer jedoch erst einen Umschalter betätigen, bevor er das entsprechende Schaltprogramm zur Verfügung gestellt bekommt. Dem Fahrer werden nur zwei alternative Extrema angeboten, die jedoch entweder nur eine verbrauchsorientierte oder eine leistungsorientierte Fahrweise zulassen.

Aus der DE 33 41 652 C2 (EP-B 144608) und der DE 39 22 051 A1 ist es in diesem Zusammenhang bekannt geworden, diese manuelle Umschaltung zu automatisieren. Hierzu wird wenigstens ein der Stellung der Fahrpedals proportionales Fahrpedal- bzw. Drosselklappensignal abgetastet und abgespeichert. Mit dem abgetasteten Wert werden zeitlich früher erfaßte und abgespeicherte Signalwerte fortlaufend aktualisiert und eine den Fahrstil eines Fahrers oder dessen verkehrssituationsbedingtes Handeln in Bezug auf die Steuerung des Kraftfahrzeugs bewertende Fahraktivität berechnet. Diese wird dann zur gezielten Beeinflussung von Grenzwerten für Schaltentscheidungen bzw. zur Auswahl von Schaltkennlinien derart herangezogen, daß der Übergang vom verbrauchsoptimierten zum leistungsoptimierten Schaltprogramm stetig oder in Stufen erfolgt.

Mit den beschriebenen Einrichtungen bzw. Verfahren ist es somit möglich, den Fahrstil des Fahrers durch Erfassen einer hierfür repräsentativen Größe nachzubilden. Die zugrundeliegenden Verfahren sind jedoch nur bedingt auf stufenlose Getriebe übertragbar, da diese zum Teil gänzlich andere Anforderungen oder Möglichkeiten bezüglich der Steuerung aufweisen. So gestatten beispielsweise stufenlose Getriebe eine größere Spreizung der Übersetzungsverhältnisse und erlauben einen Betrieb der Brennkraftmaschine in praktisch jedem möglichen und sinnvollen Betriebspunkt.

Es ist daher Aufgabe der Erfindung, ein Verfahren zur Steuerung eines stufenlosen Kraftfahrzeuggetriebes zu schaffen, mit dem ein mit einem derartigen Getriebe ausgestattetes Kraftfahrzeug möglichst optimal betrieben werden kann und das sich selbsttätig an einen Fahrstil des Fahrers oder dessen verkehrssituationsbedingtes Handeln in Bezug auf die Steuerung des Kraftfahrzeugs einstellt.

Die Aufgabe wird erfindungsgemäß durch die Merkmale des Anspruchs 1 gelöst. Weitere, die Erfindung ausgestaltende Merkmale sind in den Unteransprüchen enthalten.

Die Vorteile der Erfindung sind in erster Linie darin zu sehen, daß ein Verfahren zur Steuerung eines stufenlosen Kraftfahrzeuggetriebes geschaffen ist, das sich ausgehend von einem möglichst verbrauchsoptimalen Steuerverfahren dynamisch an das Fahrverhalten des Fahrers anpaßt, ohne daß zusätzliche Bedienelemente betätigt werden müssen.

Dies wird in erster Linie dadurch erreicht, daß die Übersetzung des Getriebes mittelbar über Steuerkennlinien wenigstens in Abhängigkeit von der Stellung eines Leistungssteuerorganes, vorzugsweise einer Drosselklappe oder eines Fahrpedales, und der Motordrehzahl der Brennkraftmaschine selbsttätig eingestellt wird; hierbei wird die Steuerkennlinie entsprechend einer den Fahrstil des Fahrers oder dessen verkehrssituationsbedingtes Handeln in Bezug auf die Steuerung des Kraftfahrzeugs bewertenden Fahraktivität aus einer Schar von mehreren Steuerkennlinien ausgewählt.

Die Steuerkennlinien decken den Bereich zwischen einer den verbrauchsoptimierten Betrieb des Kraftfahrzeugs ermöglichenden Steuerkennlinie und einer den leistungsoptimierten Betrieb des Kraftfahrzeugs ermöglichenden Steuerkennlinie zumindest schrittweise ab.

In vorteilhafter Weise wird die Übersetzungs derart eingestellt, daß die Motordrehzahl einem Motordrehzahl- Sollwert nachgeführt wird, welcher über die augenblicklich angewählte Steuerkennlinie einem augenblicklichen Wert der Stellung des Leistungssteuerorganes zugewiesen wird.

Die Steuerkennlinien weisen bevorzugt in einem unteren Wertebereich der Stellung des Leistungssteuerorganes einen progressiven Verlauf auf, der in einem mittleren Bereich in einen degressiven Verlauf übergeht.

Hiermit ergibt sich einerseits ein optimal an den Fahrstil des Fahrers oder an dessen verkehrssituationsbedingtes Handeln angepaßtes Steuerverhalten des Getriebes, und andererseits ermöglicht das Steuerverfahren in Bezug auf das Gesamtfahrzeug quasi die Einstellung eines Leistungssollwertes durch den Fahrer und dessen Einregelung über das System Brennkraftmaschine-Getriebe.

Die Erfindung wird nachstehend anhand der in den Zeichnungen dargestellten Ausführungsformen näher erläutert.

Es zeigt:
- Fig. 1: ein Blockschaltbild einer elektrischen Steuerung für ein stufenloses Getriebe eines Kraftfahrzeugs,
- Fig. 2: eine Schar von mehreren Steuerkennlinien, die Werten des Drosselklappenwinkels bestimmte Werte von Motordrehzahl- Sollwerten zuweisen,
- Fig. 3: eine motordrehzahlabhängige Grenzkennlinie, nach der die Unterscheidung zwischen Schubbetrieb und Zugbetrieb erfolgt,
- Fig. 4: eine Schar von Anfahrkennlinien, die Werten der Motordrehzah jeweils bestimmte Werte eines Kupplungs-Sollschlupfs zuweisen und
- Fig. 5: eine Schar eingeprägter Kennlinien eines Drehmomentwandlers.

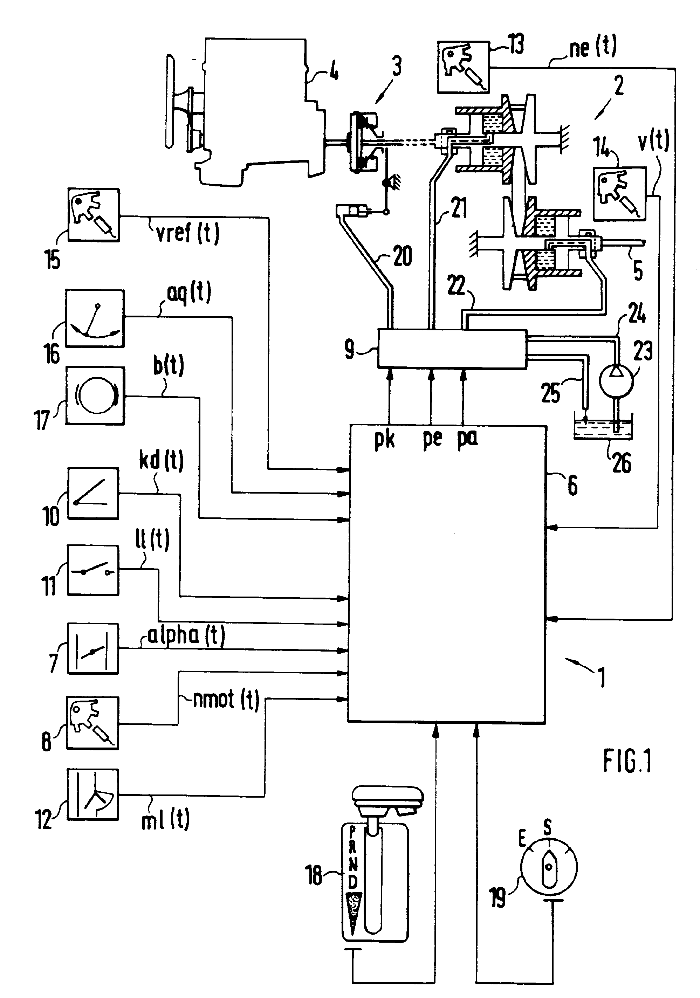

In Fig. 1 ist mit 1 eine Steuerung eines elektro-hydraulisch betätigten stufenlosen Getriebes 2 am Beispiel eines Umschlingungsgetriebes gezeigt.

Das stufenlose Getriebe 2 wird über eine steuerbare Anfahrkupplung 3 von einer Brennkraftmaschine 4 angetrieben. Eine Abtriebswelle 5 des stufenlosen Getriebes 2 ist mit einem nicht gezeigten Radantrieb eines Kraftfahrzeugs verbunden.

Nachstehend sind Funktionen oder Variable, die sich mit der Zeit t ändern, als Funktionen f(t) der Zeit t bezeichnet.

Ein Steuergerät 6 steuert wenigstens in Abhängigkeit von der die Stellung des Leistungssteuerorganes der Brennkraftmaschine 4 repräsentierenden Drosselklappenstellung alpha(t) eines Drosselklappenwinkelgebers 7 und einer Motordrehzahl nmot(t) eines Motordrehzahlgebers 8 der Brennkraftmaschine 4 einen Hydraulik-Ventilblock 9 an. Zur Steuerung des stufenlosen Getriebes 2 und der Anfahrkupplung 3 erhält das Steuergerät 6 als weitere Eingangsgrößen beziehungsweise Messsignale ein Kick-down-Signal kd(t) eines Kick-down-Schalters 10, ein Leerlaufsignal ll(t) eines Leerlaufschalters 11, eine der Brennkraftmaschine 4 zugeführte Luftmenge bzw. Luftmasse ml(t) eines Luftmengen- bzw. Luftmassengebers 12 sowie die Getriebeeingangsdrehzahl ne(t) eines Getriebeeingangsdrehzahlgebers 13 und eine Fahrgeschwindigkeit v(t) eines Fahrgeschwindigkeitgebers 14 des Kraftfahrzeugs (Getriebeausgangsdrehzahl). Zusätzlich wird vom Steuergerät 6 eine Geschwindigkeit vref(t) eines Referenzgeschwindigkeitgebers 15 an einer nicht angetriebenen Fahrzeugachse, einer Querbeschleunigung aq(t) eines Querbeschleunigungsgebers 16 und ein Bremssignal b(t) eines Bremssignalgebers 17 erfaßt und verarbeitet.

Schließlich ist die Steuerung üblicherweise vom Fahrzeugführer über einen Wählhebel 18 zur Vorwahl von Fahrstufen P (Parksperre) R (Rückwärtsgangstufe) N (Leergangstufe) D (selbstätige Einstellung des Übersetzungsverhältnisses ue des stufenlosen Getriebes) beeinflußbar; ferner ist ein Einstellbereich des Wählhebels 18 zur direkten Vorgabe des Übersetzungsverhältnisses ue vorgesehen.

Bei üblichen Getriebesteuerungen wird schließlich über einen Programmwählschalter 19 die Steuerkennlinie, nach der das Steuergerät 1 in der Fahrstufe D das stufenlose Getriebe steuert, ausgewählt. Es sind hierbei in der Regel zwei Steuerkennlinien RKLj auswählbar, wobei in der Stellung E eine verbrauchsoptimierte Steuerkennlinie RKL1 und in der Stellung S eine leistungsoptimierte Steuerkennlinie RKL5 manuell einstellbar sind.

Erfindungsgemäß ist der Programmwählschalter 19 im Steuergerät 6 durch ein Steuerverfahren ersetzt, das beispielsweise entsprechend der DE 33 48 652 C2 oder der DE 39 22 051 A1 den Fahrstil eines Fahrers oder dessen verkehrssituationsbedingtes Handeln in Bezug auf die Steuerung des Kraftfahrzeugs bewertet und eine Fahraktivität SK(t) (Fahrpedalaktivität) aus einem oder mehreren Betriebs- bzw. Fahrparametern ableitet. Auf der Basis dieser Fahraktivität SK(t) wird eine von mehreren Steuerkennlinien RKLj (j=1, 2, ..., 5) zur Steuerung des stufenlosen Getriebes bzw. der Anfahrkupplung 3 herangezogen, wie diese zuvor entsprechend einer Schaltstellung des Programmwählschalters 19 gewählt wurde.

Ohne Beschränkung der Allgemeinheit kann das stufenlose Getriebe 2 anstatt über Steuerkennlinien auch über Steuerkennfelder in Abhängigkeit von mehreren, beliebigen Betriebs- oder Fahrparametern des Kraftfahrzeugs gesteuert werden.

In Abhängigkeit von den genannten Größen steuert das Steuergerät 6 über einen Signalausgang pk und den Ventilblock 9 den Hydraulikdruck in der Anfahrkupplung 3 sowie über die Signalausgänge pe und pa und den Hydraulikventilblock 9 das Übersetzungsverhältnis ue(t) zwischen der Getriebeeingangsdrehzahl ne(t) und der Getriebeausgangsdrehzahl (Fahrgeschwindigkeit) v(t) an.

Das Übersetzungsverhältnis ue(t) ist hierbei proportional zum Quotienten aus der Getriebeeingangsdrehzahl ne(t) und der Fahrgeschwindigkeit v(t): ue(t)=prop*(ne(t)/v(t)); prop entspricht einem Proportionalitätsfaktor. Eine zahlenmäßige Vergrößerung / Verkleinerung des Übersetzungsverhältnisses ue(t) bedeutet hierbei eine Übersetzung ins Kurze / Lange.

Der Hydraulikventilblock 9 verbindet hierzu die entsprechenden Steuerleitungen 20, 21 und 22 der Anfahrkupplung 3 und des stufenlosen Getriebes 2 mit einer an eine Pumpe 23 angeschlossenen Druckleitung 24 oder einer Rücklaufleitung 25 zu einem Vorratsbehälter 26 für Hydraulikflüssigkeit.

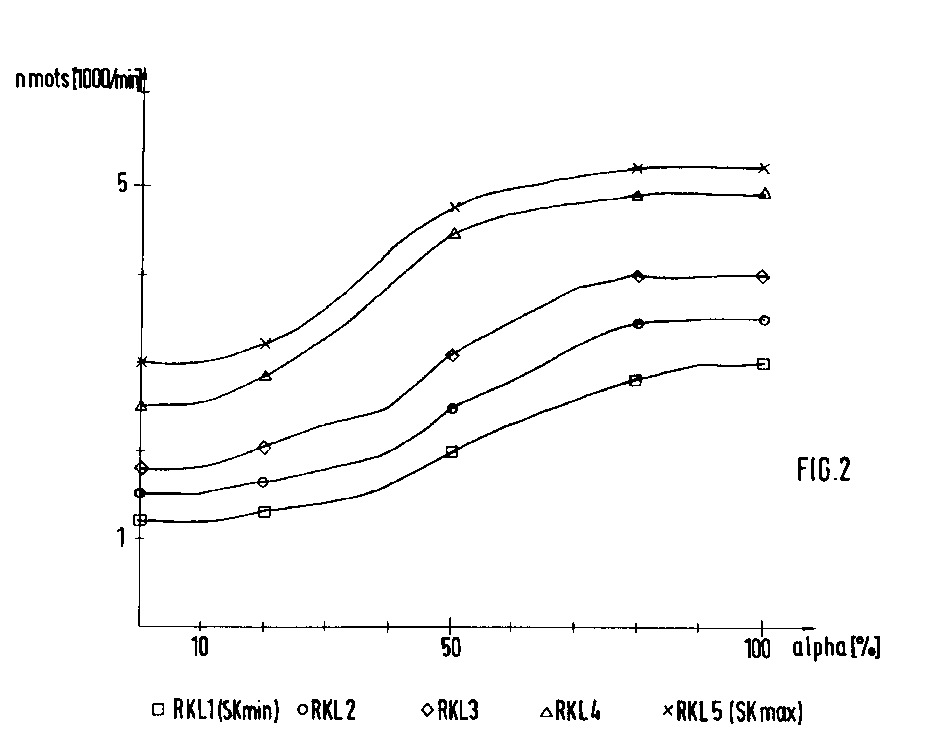

Entsprechend dem Verfahren zur Steuerung des stufenlosen Getriebes 2 wird nach der Erfindung die Übersetzung ue des Getriebes mittelbar über das Steuergerät 6 und den Ventilblock 9 über Steuerkennlinien RKLj wenigstens in Abhängigkeit von der Drosselklappenstellung alpha(t) und der Motordrehzahl nmot(t) selbsttätig eingestellt; die Steuerkennlinie RKLj wird entsprechend der den Fahrstil des Fahrers oder dessen verkehrssituationsbedingtes Handeln in Bezug auf die Steuerung des Kraftfahrzeugs bewertenden Fahraktivität SK(t) aus einer Schar von mehreren Steuerkennlinien RKLj (j=1, 2, ..., 5) entsprechend **Fig. 2** ausgewählt.

Die in der **Fig. 2** gezeigten Steuerkennlinien decken hierbei den Bereich zwischen einer Steuerkennlinie RKL1, die einen verbrauchsoptimierten Betrieb des Fahrzeugs ermöglicht, und einer Steuerkennlinie RKL5, mit welcher das Kraftfahrzeug leistungsoptimiert betrieben werden kann, zumindest schrittweise ab.

Die Steuerung des stufenlosen Getriebes 2 stellt sich somit selbsttätig auf die Fahrweise des Fahrers ein, so daß ein manueller Eingriff bzw. eine Umstellung der Steuerkennlinien nicht vorgenommen werden muß.

Die Übersetzung ue des stufenlosen Getriebes 2 wird durch das Steuergerät 6 bevorzugt derart eingestellt, daß die Motordrehzahl nmot(t) einem Motordrehzahl-Sollwert nmots möglichst optimal nachgeführt wird. Hierzu kann im Steuergerät 6 ein unterlagerter Drehzahlregler implementiert sein. Die Übersetzung ue ist somit eine Funktion des Motordrehzahl-Sollwerts nmots, der Motordrehzahl nmot und der Zeit t: ue=f(nmots, nmot, t). Eine Abweichung Dnmot(t)=nmots(t)-nmot(t) der Motordrehzahl nmot(t) vom Motordrehzahl-Sollwert nmots(t) wird gegen 0 geführt.

Der augenblickliche Wert des Motordrehzahl-Sollwerts nmots wird hierbei über die augenblicklich angewählte Steuerkennlinie RKLj gemäß **Fig. 2** aus dem augenblicklichen Wert der Drosselklappenstellung alpha(t) und der Fahraktivität SK(t) ermittelt: nmots=RKLj(alpha, SK). Auch hierbei können wiederum die Steuerkennlinien RKLj zu Steuerkennfeldern ausgeweitet werden, um die Steuerung des Getriebes 2 von weiteren Parametern abhängig zu machen.

Wie der **Fig. 2** zu entnehmen ist, verlaufen die Steuerkennlinien RKLj im wesentlichen wie folgt: Die Steuerkennlinien RKLj weisen in einem unteren Wertebereich der Drosselklappenstellung alpha einen progressiven Verlauf auf, der in einem mittleren Bereich der Drosselklappenstellung alpha in einen degressiven Verlauf übergeht. Die Drosselklappenstellung alpha ist auf der horizontalen Achse in Prozent aufgetragen, wobei der Wert 0 % der geschlossenen Drosselklappe und der Wert 100 % der voll geöffneten Drosselklappe entspricht.

Es sind fünf Steuerkennlinien RKL1, RKL2, RKL3, RKL4 und RKL5 eingetragen, wobei die Steuerkennlinie RKL1 den verbrauchsoptimierten Betrieb des Kraftfahrzeugs ermöglicht und bei minimaler Fahraktivität SK(t)=SKmin angewählt wird. Die Steuerkennlinie RKL5 wird bei maximaler Fahraktivität SK(t)=SKmax ausgewählt, bei der der leistungsoptimierte Betrieb des Kraftfahrzeugs möglich ist. Die dazwischen liegenden Steuerkennlinien RKL2 bis RKL4 werden gestaffelt mit wachsender Fahraktivität SK(t) zur Steuerung herangezogen.

Entsprechend der DE 33 41 652 C2 oder der DE 39 22 051 A1 wird die Fahraktivität SK(t) durch einen den Fahrstil des Fahrers oder dessen verkehrssituationsbedingtes Handeln längerfristig bewertenden funktionellen Zusammenhang aus zyklisch oder antizyklisch erfaßten aktuellen und vergangenen Werten einer einzigen Betriebskenngröße oder zu einer einzigen aus mehreren Betriebsgrößen eines Kraftfahrzeugs zusammengesetzten Größe ermittelt.

Hierbei werden beispielsweise Werte der Drosselklappenstellung alpha(t), der Fahrgeschwindigkeit v(t) und der Querbeschleunigung aq(t) im Sekunden- bzw. Millisekundenbereich erfaßt und daraus weitere Werte, wie z.B. die Drosselklappenänderungsgeschwindigkeit dalpha(t)/dt und die Beschleunigung des Fahrzeugs dv(t)/dt berechnet. Die ermittelten und berechneten Werte werden über Kennfelder mit weiteren Betriebsgrößen verknüpft und über einen funktionellen Zusammenhang zu einer Zwischengröße zusammengesetzt, aus der durch gleitende Mittelwertbildung, die sowohl die neu berechneten Werte als auch die vergangenen Werte längerfristig berücksichtigt, eine Fahraktivität SK(t) ermittelt.

Über einen weiteren funktionellen Zusammenhang wird diese Fahraktivität SK(t) schließlich, z.B. entsprechend der in der DE 39 22 051 A1 gezeigten Weise, eine Steuerkennlinie RKLj zugeordnet.

Es hat sich insbesondere im Zusammenhang mit stufenlosen Getrieben gezeigt, daß es sinnvoll sein kann, die Bewertung des Fahrstils des Fahrers oder dessen verkehrssituationsbedingten Handelns unter definierten Betriebszuständen des Kraftfahrzeugs zu unterbrechen.

Ein erster Betriebszustand tritt hierbei ein, wenn das Kraftfahrzeug bei laufender Brennkraftmaschine anhält. Dieser erste Betriebszustand kann beispielsweise definiert werden durch Fahrgeschwindigkeit v(t)≈0, und Motordrehzahl nmot(t)>0 (Motordrehzahl nmot(t) entspricht einer Leerlaufdrehzahl: nmot(t)=nll). Hierbei wird der augenblickliche Wert der Fahraktivität SK(t) wenigstens für den Zeitraum, für den der jeweilige Betriebszustand eintritt, gespeichert und die Bewertung im Anschluß an diesen Zeitraum mit dem abgespeicherten Wert der Fahraktivität fortgesetzt. Hiermit wird erreicht, daß die Fahraktivität SK(t) während längerer Haltezeiten des Kraftfahrzeugs bei laufendem Motor, z.B. bei einem Ampelstop, nicht auf den Minimalwert SKmin absinkt.

Ein zweiter Betriebszustand tritt ein, sobald das Kraftfahrzeug abgestellt wird. Dieser Betriebszustand ist gekennzeichnet durch Fahrgeschwindigkeit v(t)≈0 und Motordrehzahl nmot(t)≈0 oder eine abgestellte Zündung des Kraftfahrzeugs bzw. der antreibenden (Brennkraft-) Maschine. Auch hier kann wiederum der augenblickliche Wert der Fahraktivität SK(t) wenigstens für den Zeitraum, für den der jeweilige Betriebszustand eintritt, gespeichert und die Bewertung im Anschluß an diesen Zeitraum mit dem abgespeicherten Wert der Fahraktivität fortgesetzt werden.

Ergänzend kann in vorteilhafter Weise ein vom Fahrzeugführer manuell zu betätigender Tastschalter (beispielsweise im Bereich des Armaturenbretts des Kraftfahrzeugs) vorgesehen werden, mit dem die Fahraktivität SK(t) auf einen Grundwert, zum Beispiel den Wert SKmin, zurückgesetzt werden kann.

Als Alternative zum zweiten Betriebszustand kann unter den dort gegebenen Bedingungen die Fahraktivität auch selbstständig auf den Grundwert SKmin zurückgesetzt werden (dritter Betriebszustand).

Die Fahraktivität SK(t) wird ohne Unterbrechung der Bewertung des Fahrstils des Fahrers oder dessen verkehrssituationsbedingten Handelns vorübergehend auf einen den leistungsoptimierten Betrieb des Kraftfahrzeugs ermöglichenden Wert SKmax (Steuerkennlinie RKL5) gesetzt, wenn die zeitliche Änderung der Drosselklappenstellung dalpha/dt einen ersten (positiven) Grenzwert alphagl überschreitet und solange die Drosselklappenstellung alpha(t) einen festgesetzten Wert afg noch nicht unterschritten hat: alpha(t)>afg. Hiermit wird erreicht, daß der Fahrer bei plötzlicher erhöhter Leistungsanforderung selbst dann eine leistungsoptimierte Steuerfunktion erhält, wenn er den Kick-down-Schalter 10 nicht betätigt (schnelles Durchtreten des Fahrpedals, ohne den Anschlag zu erreichen und damit den Kick- down- Schalter 10 zu betätigen).

In weiterer Ausgestaltung der Erfindung wird die Übersetzung ue des Getriebes festgehalten, wenn ein Zustand einer Übersetzungsfesthaltung usf aktiv ist (usf=1), wobei der Zustand der Übersetzungsfesthaltung in den aktiven Zustand übergeht, usf=1, wenn die zeitliche Änderung dalpha(t)/dt der Drosselklappenstellung alpha(t) einen zweiten (negativen) Grenzwert -alphag2 unterschreitet und Schubbetrieb erkannt wird. Der Zustand der Übersetzungsfesthaltung usf geht nach Ablauf eines ersten Zeitraumes T1(SK(t)) in den inaktiven Zustand über, usf=0, wenn Zugbetrieb erkannt wird.

Alternativ dazu kann, solange der Zustand der Übersetzungsfesthaltung usf aktiv ist, usf=1, die Übersetzung ue zumindest so lange mit einer ersten bestimmten endlichen und relativ langsamen Geschwindigkeit (erste zeitliche Änderung der Übersetzung ck1=due/dt=f(SK(t)) bis zu demjenigen Wert der Übersetzung ue verstellt (abgesenkt) werden, der im augenblicklichen Betriebspunkt des Kraftfahrzeugs (alpha(t),v(t), nmot(t), t) in der augenblicklich eingestellten Steuerkennlinie RKLj vorgesehen ist. Der Zustand der Übersetzungsfesthaltung geht hierbei in den aktiven Zustand über, usf=1, wenn die zeitliche Änderung dalpha/dt der Drosselklappenstellung alpha(t) den zweiten (negativen) Grenzwert -alphag2 unterschreitet und Schubbetrieb erkannt wird. Der Zustand der Übersetzungsfesthaltung usf geht nach Ablauf eines zweiten Zeitraums T2(SK(t)) in den inaktiven Zustand über, usf=0, wenn Zugbetrieb erkannt wird.

Diese beiden Fälle berücksichtigen hierbei das Heranfahren an Kurven, bei dem sich gezeigt hat, daß ein Fahrer eines Kraftfahrzeugs hierbei in der Regel rascher vom Fahrpedal geht, als wenn er das Fahrzeug zum Stillstand bringen will oder ausrollen läßt. Die vor Eintreten der beiden Fälle eingestellte Übersetzung ue wird, entgegen sonst üblicher Getriebesteuerungen, jeweils für den bestimmten Zeitraum T1 bzw. T2 festgehalten bzw. mit verminderter Geschwindigkeit abgesenkt.

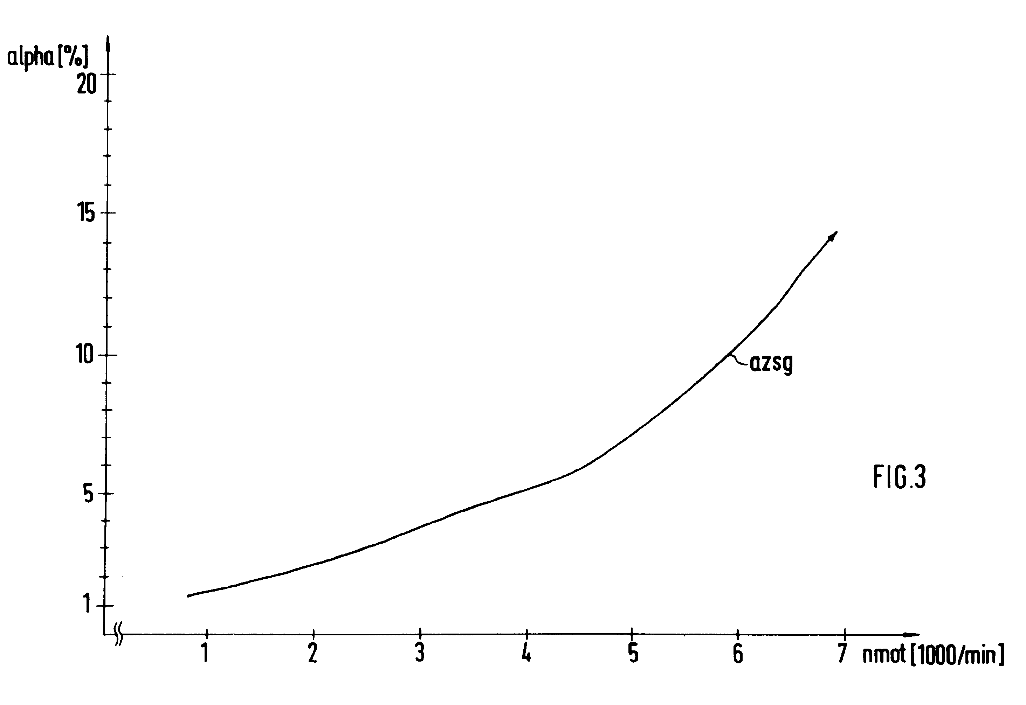

Die Begriffe Schubbetrieb und Zugbetrieb sind hierbei folgendermaßen definiert:
- Schubbetrieb wird erkannt, wenn die Drosselklappenstellung alpha(t) unter einem motordrehzahlabhängige Grenzkennlinie azsg(nmot) nach **Fig. 3** fällt: alpha(t)<azsg(nmot).
- Zugbetrieb wird erkannt, wenn sowohl die Drosselklappenstellung alpha(t) die motordrehzahlabhängige Grenzkennlinie azsg(nmot) nach **Fig. 3** überschreitet (alpha(t)>azsg(nmot)), als auch die zeitliche Änderung der Fahrgeschwindigkeit dv(t)/dt positive Werte annimmt:
   alpha(t)>azsg(nmot) ∩ dv(t)/dt>0.

Nach Deaktivierung der Übersetzungsfesthaltung (usf=1 -> usf=0) im Schubbetrieb wird die Übersetzung ue(t) mit einer bestimmten Verstellgeschwindigkeit due/dt=FDUE(nmot, SK) vom Wert bei Übergang in den Schubbetrieb aus auf den zum Erreichen des vorgegebenen Motordrehzahl-Sollwerts nmots(t) nächstliegenden oder notwendigen Wert eingestellt. Dieser Motordrehzahl- Sollwert nmots(t) wird hierbei durch die augenblicklich angewählte Steuerkennlinie RKLj nach **Fig. 2** (bei geschlossener Drosselklappe alpha(t)≈0) vorgegeben: nmots=RKLj(alpha≈0, SK(t)).

Die Verstellgeschwindigkeit der Übersetzung due/dt wird hierbei bevorzugt über ein experimentell zu bestimmendes Kennfeld FDUE(nmot, SK) aus den momentanen oder bei Übergang in den Schubbetrieb ermittelten Werten von Motordrehzahl nmot(t) und Fahraktivität SK(t) ermittelt.

Alternativ dazu kann nach Deaktivierung der Übersetzungsfesthaltung (usf=1 -> usf=0) im Schubbetrieb die Übersetzung ue(t) derart eingestellt werden, daß die Motordrehzahl nmot(t) mit einer bestimmten Verstellgeschwindigkeit dnmot(t)/dt=FDNMOT(nmot, SK) vom Wert bei Übergang in den Schubbetrieb aus auf den Motordrehzahl- Sollwert nmots(t)=RKLj(alpha≈0, SK(t)) abgesenkt wird. Die Verstellgeschwindigkeit der Motordrehzahl dnmot/dt wird auch hier wieder über ein experimentell zu ermittelndes Kennfeld FDNMOT(nmot, SK) aus den momentanen oder bei Übergang in den Schubbetrieb ermittelten Werten von Motordrehzahl nmot(t) und Fahraktivität SK(t) bestimmt.

Die Verstellgeschwindigkeit der Motordrehzahl dnmot(t)/dt kann hierbei konstant gehalten werden, sofern die Motordrehzahl nmot(t) den von der momentanen oder bei Übergang in den Schubbetrieb ermittelten Steuerkennlinie vorgegebenen Wert des Motordrehzahl-Sollwerts nmots erreicht und die Motordrehzahl einen Grenzwert nmotg(SK(t)) noch nicht unterschritten hat: nmot(t)>nmotg(SK(t)).

Der Grenzwert nmotg(SK(t)) kann hierbei wiederum von der Fahraktivität abhängen und mit wachsender Fahraktivität größer werden. Nach Unterschreiten des Grenzwerts nmot(t) wird die augenblicklich eingestellte Übersetzung ue(t) festgehalten, bis die Motordrehzahl nmot(t) die Leerlaufdrehzahl nmotll der Brennkraftmaschine erreicht hat. Schließlich wird bei Erreichen der Leerlaufdrehzahl nmotll die Anfahrkupplung 3 geöffnet.

Durch die hier beschriebene Steuerung des Übersetzungsverhältnisses bzw. der Motordrehzahl wird erreicht, daß sich die Bremswirkung der Brennkraftmaschine im Schubbetrieb und nicht aktiver Übersetzungsfesthaltung usf=0 verstärkt auf die Verzögerung des Kraftfahrzeugs auswirkt.

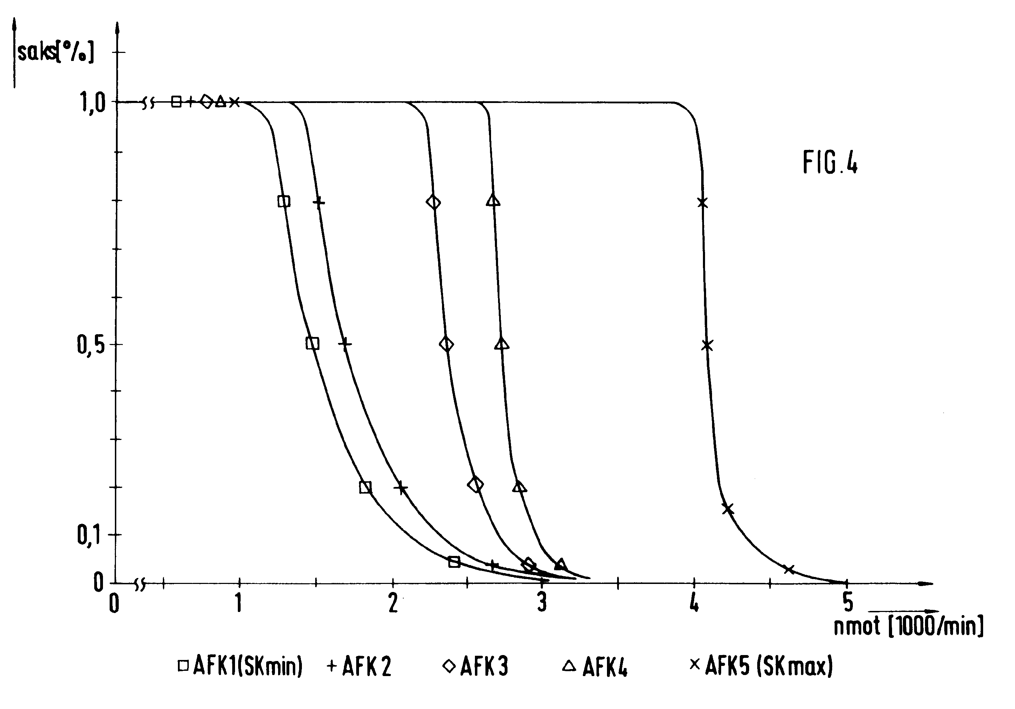

Ferner wird erfindungsgemäß eine Anfahrkennlinie AFK(SK(t)), nach der eine dem stufenlosen Getriebe 2 vorgeschaltene Anfahrkupplung 3 in Abhängigkeit von wenigstens der Motordrehzahl nmot(t) bei einem Anfahrvorgang gesteuert wird, entsprechend dem vor dem Anfahrvorgang oder vor dem Anhalten des Kraftfahrzeuges ermittelten Wert der Fahraktivität SK(t) aus einer Schar von mehreren Anfahrkennlinien AFKi (i=1, 2, ..., 5), siehe **Fig. 4**, ausgewählt: AFK1 für SKmin, AFK2 bis AFK4 gestaffelt nach wachsenden Werten der Fahraktivität SK(t), AFK5 für SKmax.

Hiermit ist es möglich, einen Faßpunkt, bei dem die Differenzdrehzahl Dk(t)=nmot(t)-ne(t) zwischen der Motordrehzahl nmot(t) und der Getriebeeingangsdrehzahl ne(t) zu Null wird, entsprechend der Fahraktivität SK(t) einzustellen. Bei höheren Werten der Fahraktivität wird der Faßpunkt zu höheren Motordrehzahlen hin und damit bei Brennkraftmaschinen zu höheren Werten des Motordrehmoments bzw. der Motorleistung hin verschoben.

Der Druck auf die Reibglieder der Anfahrkupplung 3 wird hierbei derart eingestellt, daß die auf die Motordrehzahl nmot(t) bezogene Drehzahldifferenz (Kupplungsschlupf) sak(t)=Dk(t)/nmot(t)=(nmot(t)-ne(t))/nmot(t) zwischen der Motordrehzahl nmot(t) und der Getriebeeingangsdrehzahl ne(t) über die Anfahrkennlinie AFK(SK(t)) nach **Fig. 4** einem augenblicklichen Wert der Motordrehzahl nmot zugewiesenen Kupplungssollschlupf saks(t) nachgeführt wird; dies kann beispielsweise mittels eines unterlagerten Regelkreises erfolgen.

Die Anfahrkennlinien AFK(SK(t)) weisen wachsenden Werten der Motordrehzahl nmot fallende Werte des Kupplungssollschlupfs zu. Mit wachsenden Werten der Fahraktivität SK(t) werden die Anfahrkennlinien AFK(SK(t)) zu höheren Werten der Motordrehzahl nmot hin verschoben.

In vorteilhafter Weise wird die Anfahrkupplung geöffnet oder die momentan eingestellte Übersetzung ue verkleinert, wenn im Schubbetrieb ein Betrag einer Differenzgeschwindigkeit |Dv(t)|=|vref(t)-v(t)| zwischen einer Geschwindigkeit vref(t) einer nicht angetriebenen Achse und der an einer angetriebenen Achse erfaßten Fahrgeschwindigkeit v(t) einen zulässigen Differenzgeschwindigkeitswert Dvzul(SK(t)) überschreitet:
|Dv(t)|<|Dvzul(SK(t))|. Mit dieser Maßnahme kann somit übermäßiger Bremsschlupf reduziert werden.

Sofern das Kraftfahrzeug anstatt mit einer Anfahrkupplung 3 mit einem steuerbaren Drehmomentwandler als dem Getriebe 2 vorgeschalteter drehzahlwandelnder Anfahreinrichtung ausgestattet ist, wird dessen eingeprägte Kennlinie WSK(SK(t)) (Kupplungs- bzw. Wandlerschlupf sak über der Motordrehzahl nmot) entsprechend dem vor dem Anfahrvorgang oder vor dem Anhalten des Kraftfahrzeuges ermittelten Wert der Fahraktivität SK(t) ausgewählt und zumindest beim Anfahrvorgang mit wachsender Fahraktivität SK(t) weicher eingestellt.

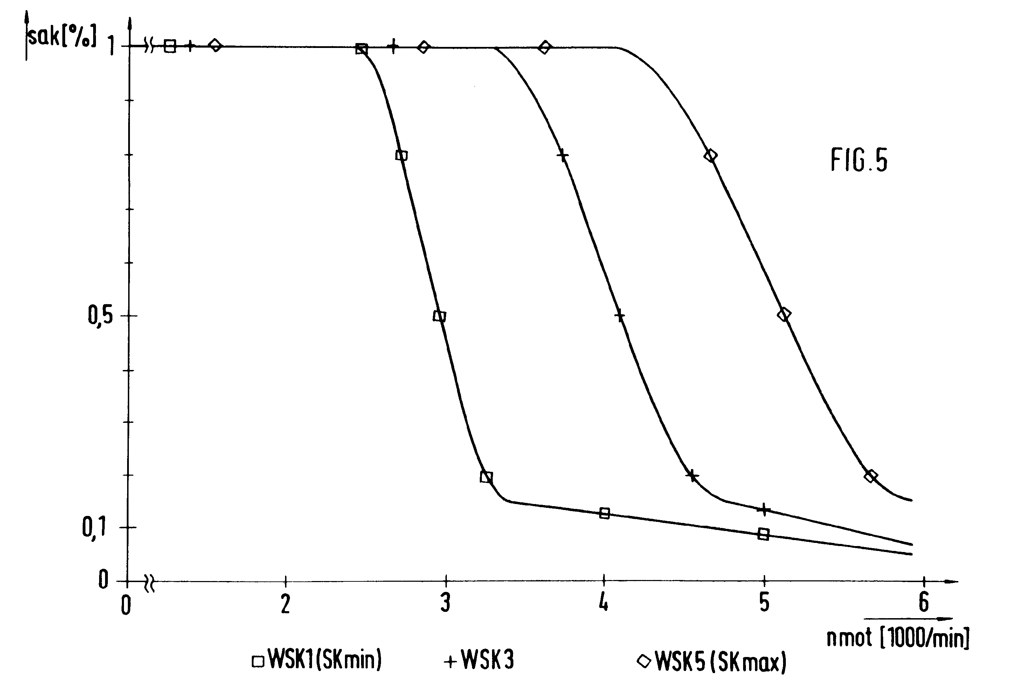

Die weichere Einstellung der Kennlinie WSK(SK(t)) ermöglicht hierbei höhere Drehzahlen der Antriebs-Brennkraftmaschine und somit höhere Werte des zum Anfahren eingesetzten Drehmoments bzw. der eingesetzten Leistung. Entsprechende Wandlerkennlinien WSK1 (SK=SKmin), WSK3(SK) und WSK5(SK=SKmax) sind in **Fig. 5** dargestellt.

Weiter kann in vorteilhafter Weise ein Wert der Übersetzung ue(t) bei einem Anfahrvorgang entsprechend dem vor dem Anfahrvorgang oder vor dem Anhalten des Kraftfahrzeugs ermittelten Wert der Fahraktivität SK(t) eingestellt werden. Mit wachsender Fahraktivität SK(t) wird der Wert der Übersetzung beim Anfahrvorgang vergrößert.

Ist der Drehmomentwandler mit einer schaltbaren Wandlerüberbrückungskupplung zum Überbrücken des Drehmomentwandlers ausgestattet, so können Schaltgrenzen, bei denen die Wandlerüberbrückungskupplung geöffnet (nmot<wuko(SK(t)) oder geschlossen (nmot>wuks(SK(t)) wird, wenigstens von der Fahraktivität SK(t) abhängen. Mit wachsender, mehr leistungsorientierter Fahraktivität werden die Schaltgrenzen zu niedrigeren Werten hin verschoben.

Schließlich kann entstehender Antriebs- oder Bremsschlupf in vorteilhafter Weise vermieden werden, indem die augenblicklich eingestellte Übersetzung ue des Getriebes verkleinert wird, sofern der Betrag der Differenzgeschwindigkeit zwischen der Geschwindigkeit vref einer nicht angetriebenen Achse und der an einer angetriebenen Achse erfaßten Fahrgeschwindigkeit v(t) den zulässigen Differenzgeschwindigkeitswert Dvzul(SK(t)) überschreitet. Beim Überschreiten des zulässigen Differenzgeschwindigkeitswerts Dvzul(SK(t)) kann
- eine Wandlerüberbrückungskupplung eines mit einem Drehmomentwandler ausgestatteten Getriebes geöffnet,
- eine Haltezeit Th(SK(t)) gesetzt werden, während der eine Verkleinerung der Übersetzung nicht unterbunden werden kann und
- eine Vergrößerung der Übersetzung verhindert werden, wobei diese Funktionen wieder zurückgesetzt werden, wenn sowohl Zugbetrieb erkannt wird als auch positive Werte der Änderung der Fahrtgeschwindigkeit v(t) vorliegen als auch der Betrag der Differenzgeschwindigkeit Dv(t) kleiner als der zulässige Differenzgeschwindigkeitswert Dvzul(SK(t)) ist.

Die Zeiträume T1(SK(t)), T2(SK(t)), die Haltezeit Th(SK(t)) und der zulässige Differenzgeschwindigkeitswert Dvzul(SK(t)) können von der Fahraktivität SK(t) abhängen. Die Zeiträume T1(SK(t)) und T2(SK(t)) werden mit wachsender Fahraktivität SK(t) größer, während die Haltezeit Th(SK(t)) und der zulässige Differenzgeschwindigkeitswert Dvzul(SK(t)) mit wachsender Fahraktivität SK(t) kleiner werden. Die Zeiträume und die Haltezeit variieren bevorzugt in einem Bereich von 1 bis 3 sec.

## Patentansprüche

1. Verfahren zur Steuerung eines stufenlosen Getriebes (2), das vorzugsweise elektrohydraulisch betätigt wird, eines angetriebenen Kraftfahrzeugs, dessen als Brennkraftmaschine (4) ausgeführter Motor mittels eines Leistungssteuerorgans beeinflußbar ist, wobei die Übersetzung (ue) des Getriebes (2) mittelbar über wenigstens eine Steuerkennlinie (RKLj) wenigstens in Abhängigkeit von der Stellung des Leistungssteuerorganes (alpha(t)) und der Motordrehzahl (nmot(t)) selbsttätig eingestellt wird und die Steuerkennlinie (RKLj) entsprechend einer den Fahrstil des Fahrers oder dessen verkehrssituationsbedingtes Handeln im Bezug auf die Steuerung des Kraftfahrzeugs bewertenden Fahraktivität (SK(t)) aus einer Schar von mehreren Steuerkennlinien (RKLj; j=1, 2, ..., 5) ausgewählt wird, und wobei die Steuerkennlinien den Bereich zwischen einer den verbrauchsoptimierten Betrieb des Kraftfahrzeugs ermöglichenden Steuerkennlinie (RKL1) und einer den leistungsoptimierten Betrieb des Kraftfahrzeugs ermöglichenden Steuerkennlinie (RKL5) zumindest schrittweise abdecken.

2. Verfahren nach Anspruch 1, **dadurch gekennzeichnet,** daß die Übersetzung (ue) derart eingestellt wird, daß die Motordrehzahl (nmot(t)) einem über die Steuerkennlinie (RKLj) einem augenblicklichen Wert der Stellung des Leistungssteuerorganes (alpha(t)) zugewiesenen Motordrehzahl- Sollwert (nmots) nachgeführt wird.

3. Verfahren nach Anspruch 2, **dadurch gekennzeichnet**, daß die einer bestimmten Stellung des Leistungssteuerorganes (alpha) einen bestimmten Motordrehzahl- Sollwert (nmots) zuweisenden Steuerkennlinien (RKLj) in einem unteren Wertebereich der Stellung des Leistungssteuerorganes (alpha(t)) einen progressiven Verlauf aufweisen, der in einem mittleren Bereich der Stellung des Leistungssteuerorganes (alpha(t)) in einen degressiven Verlauf übergeht.

4. Verfahren nach Anspruch 1, 2 oder 3, **dadurch gekennzeichnet**, daß die Fahraktivität (SK(t)) durch eine den Fahrstil des Fahrers oder dessen verkehrssituationsbedingtes Handeln längerfristig bewertenden funktionellen Zusammenhang (gleitende Mittelwertbildung) aus zyklisch oder antizyklisch erfaßten aktuellen und vergangenen Werten einer einzigen Betriebskenngröße oder einer zu einer einzigen aus mehreren Betriebskenngrößen eines Kraftfahrzeugs zusammengesetzten Größe ermittelt wird.

5. Verfahren nach Anspruch 1, 2, 3 oder 4, **dadurch gekennzeichnet**, daß die Bewertung des Fahrstils des Fahrers oder dessen verkehrssituationsbedingten Handelns unter definierten Betriebszuständen des Kraftfahrzeugs unterbrochen wird.

6. Verfahren nach Anspruch 5, **dadurch gekennzeichnet**, daß ein erster Betriebszustand eintritt, wenn das Kraftfahrzeug anhält und die Brennkraftmaschine läuft, wobei bei Eintreten des ersten Betriebszustands der augenblickliche Wert der Fahraktivität (SK(t)) wenigstens für den Zeitraum, für den der erste Betriebszustand eintritt, gespeichert wird und die Bewertung im Anschluß an diesen Zeitraum mit dem abgespeicherten Wert der Fahraktivität beginnend fortgesetzt wird.

7. Verfahren nach Anspruch 5 oder 6, **dadurch gekennzeichnet**, daß ein zweiter Betriebszustand eintritt, wenn das Kraftfahrzeug abgestellt wird, wobei bei Eintreten des zweiten Betriebszustands der augenblickliche Wert der Fahraktivität (SK(t)) wenigstens für den Zeitraum, für den der zweite Betriebszustand eintritt, gespeichert wird und die Bewertung im Anschluß an diesen Zeitraum mit dem abgespeicherten Wert der Fahraktivität beginnend fortgesetzt wird.

8. Verfahren nach wenigstens einem der vorangehenden Ansprüche, **dadurch gekennzeichnet**, daß die Fahraktivität (SK(t)) durch einen manuell zu betätigenden Tastschalter auf einen Grundwert (Minimalwert SKmin) zurückgesetzt werden kann.

9. Verfahren nach wenigstens einem der vorangehenden Ansprüche 1 bis 6 oder 8, **dadurch** **gekennzeichnet**, daß ein dritter Betriebszustand eintritt, wenn das Kraftfahrzeug abgestellt wird, wobei bei Eintreten des dritten Betriebszustands der augenblickliche Wert der Fahraktivität (SK(t)) selbsttätig auf den Grundwert (Minimalwert SKmin) zurückgesetzt wird.

10. Verfahren nach wenigstens einem der vorangehenden Ansprüche, **dadurch gekennzeichnet**, daß die Fahraktivität (SK(t)) ohne Unterbrechung der Bewertung des Fahrstils des Fahrers oder dessen verkehrssituationsbedingten Handelns vorübergehend auf einen eine den leistungsoptimierten Betrieb des Kraftfahrzeugs ermöglichende Steuerkennlinie (RKL5) auswählenden Wert (SKmax) gesetzt wird, sobald die zeitliche Änderung der Stellung des Leistungssteuerorganes (dalpha/dt) einen ersten (positiven) Grenzwert (alphag1) überschreitet und solange die Stellung des Leistungssteuerorganes (alpha(t)) einen festgesetzten Wert (afg) noch nicht unterschritten hat.

11. Verfahren nach wenigstens einem der Ansprüche 1 bis 10, **dadurch gekennzeichnet**, daß die Übersetzung des Getriebes (2) festgehalten wird, wenn ein Zustand einer Übersetzungsfesthaltung (usf) aktiv ist (usf=1), wobei der Zustand der Übersetzungsfesthaltung (usf) in den aktiven Zustand übergeht (usf=1), wenn eine zeitliche Änderung (dalpha(t)/dt) der Stellung des Leistungssteuerorganes (alpha(t)) einen zweiten (negativen) Grenzwert (-alphag2) unterschreitet und Schubbetrieb erkannt wird, und wobei der Zustand der Übersetzungsfesthaltung (usf) nach Ablauf eines ersten Zeitraums (T1(SK(t))) in den inaktiven Zustand übergeht (usf=0), wenn Zugbetrieb erkannt wird.

12. Verfahren nach wenigstens einem der Ansprüche 1 bis 10, **dadurch gekennzeichnet**, daß die Übersetzung (ue) zumindest solange mit einer ersten bestimmten endlichen und relativ langsamen Geschwindigkeit (ck1) bis zu demjenigen Wert der Übersetzung (ue), der im augenblicklichen Betriebspunkt des Kraftfahrzeugs (alpha(t), v(t), nmot(t), t) in der augenblicklich eingestellten Steuerkennlinie (RKLj) vorgesehen ist, verstellt wird, wie der Zustand einer Übersetzungsfesthaltung (usf) aktiv ist (usf=1), wobei der Zustand der Übersetzungsfesthaltung in den aktiven Zustand übergeht (usf=1), wenn die zeitliche Änderung (dalpha(t)/dt) der Stellung des Leistungssteuerorganes (alpha(t)) den zweiten negativen Grenzwert (-alphag2) unterschreitet und Schubbetrieb erkannt wird, und wobei der Zustand der Übersetzungsfesthaltung (usf) nach Ablauf eines zweiten Zeitraums (T2(SK(t))) in den inaktiven Zustand übergeht (usf=0), wenn Zugbetrieb erkannt wird.

13. Verfahren nach wenigstens einem der vorangehenden Ansprüche, **dadurch gekennzeichnet**, daß Schubbetrieb erkannt wird, wenn die Stellung des Leistungssteuerorganes (alpha(t)) unter eine motordrehzahlabhängige Grenzkennlinie (azsg(nmot)) fällt.

14. Verfahren nach wenigstens einem der vorangehenden Ansprüche, **dadurch gekennzeichnet**, daß Zugbetrieb erkannt wird, wenn sowohl die Stellung des Leistungssteuerorganes (alpha(t)) die motordrehzahlabhängige Grenzkennlinie azsg(nmot) überschreitet, als auch die zeitliche Änderung der Fahrgeschwindigkeit (dv(t)/dt) positive Werte annimmt.

15. Verfahren nach wenigstens einem der vorangehenden Ansprüche, **dadurch gekennzeichnet**, daß nach Deaktivierung der Übersetzungsfesthaltung (usf=1 -> usf=0) im Schubbetrieb die Übersetzung (ue(t)) mit einer bestimmten Verstellgeschwindigkeit vom Wert bei Übergang in den Schubbetrieb aus auf den zum Erreichen des durch die augenblicklich angewählte Steuerkennlinie (RKLj) vorgegebenen Motordrehzahl- Sollwerts (nmots) bei geschlossenem Leistungssteuerorgan nächstliegenden oder notwendigen Wert der Übersetzung (ue) eingestellt wird.

16. Verfahren nach Anspruch 15, **dadurch gekennzeichnet**, daß die Verstellgeschwindigkeit der Übersetzung (due/dt) über ein Kennfeld (FDUE(nmot, SK)) aus den momentanen oder bei Übergang in den Schubbetrieb ermittelten Werten von Motordrehzahl (nmot(t)) und Fahraktivität (SK(t)) bestimmt wird.

17. Verfahren nach wenigstens einem der Ansprüche 1 bis 14, **dadurch gekennzeichnet**, daß nach Deaktivierung der Übersetzungsfesthaltung (usf=1 -> usf=0) im Schubbetrieb die Übersetzung (ue(t)) derart eingestellt wird, daß die Motordrehzahl (nmot(t)) mit einer bestimmten Verstellgeschwindigkeit vom Wert bei Übergang in den Schubbetrieb aus auf den durch die augenblicklich angewählte Steuerkennlinie (RKLj) vorgegebenen Motordrehzahl- Sollwert (nmots) bei geschlossenem Leistungssteuerorgan eingestellt wird.

18. Verfahren nach Anspruch 17, **dadurch gekennzeichnet**, daß die Verstellgeschwindigkeit der Motordrehzahl (dnmot(t)tdt) über ein Kennfeld (FDNMOT) aus den momentanen oder bei Übergang in den Schubbetrieb ermittelten Werten von Motordrehzahl (nmot(t)) und Fahraktivität (SK(t)) ermittelt wird.

19. Verfahren nach Anspruch 17 oder 18, **dadurch gekennzeichnet**, daß die Verstellgeschwindigkeit der Motordrehzahl (dnmot(t)/dt) konstant gehalten wird, sofern die Motordrehzahl (nmot(t)) den von der momentanen oder bei Übergang in den Schubbetrieb ermittelten Steuerkennlinie vorgegebenen Wert des Motordrehzahl- Sollwerts (nmots) erreicht und die Motordrehzahl einen Grenzwert (nmotg(SK(t))) noch nicht unterschritten hat.

20. Verfahren nach Anspruch 19, **dadurch gekennzeichnet**, daß die augenblicklich eingestellte Übersetzung (ue(t)) festgehalten wird, wenn die Motordrehzahl (nmot(t)) den Grenzwert (nmotg(SK(t))) unterschreitet, jedoch die Leerlaufdrehzahl (nmotll) noch nicht erreicht hat.

21. Verfahren nach wenigstens einem der vorangehenden Ansprüche, **dadurch gekennzeichnet**, daß eine Anfahrkennlinie (AFK(SK(t))), nach der eine dem stufenlosen Getriebe vorgeschaltete Anfahrkupplung (3) in Abhängigkeit von wenigstens der Motordrehzahl (nmot(t)) bei einem Anfahrvorgang gesteuert wird, entsprechend dem vor dem Anfahrvorgang oder vor dem Anhalten des Kraftfahrzeugs ermittelten Wert der Fahraktivität (SK(t)) aus einer Schar von mehreren Anfahrkennlinien (AFKi; i=1, 2, ..., 5) ausgewählt wird.

22. Verfahren nach Anspruch 21, **dadurch gekennzeichnet**, daß der Druck auf die Reibglieder der Anfahrkupplung (3) derart eingestellt wird, daß die auf die Motordrehzahl (nmot(t)) bezogene Drehzahldifferenz (sak(t)) zwischen der Motordrehzahl (nmot(t)) und der Getriebeeingangsdrehzahl (ne(t)) einem über die Anfahrkennlinie (AFK(SK(t))) einem augenblicklichen Wert der Motordrehzahl (nmot(t)) zugewiesenen Kupplungssollschlupf (saks(t)) nachgeführt wird.

23. Verfahren nach Anspruch 22, **dadurch gekennzeichnet**, daß die Anfahrkennlinien (AFK(SK(t))) wachsenden Werten der Motordrehzahl (nmot) fallende Werte des Kupplungssollschlupfs (saks) zuweisen.

24. Verfahren nach Anspruch 22 oder 23, **dadurch gekennzeichnet**, daß mit wachsenden Werten der Fahraktivität (SK(t)) die Anfahrkennlinien (AFK(SK(t))) zu höheren Werten der Motordrehzahl (nmot) hin verschoben werden.

25. Verfahren nach wenigstens einem der Ansprüche 21 bis 24, **dadurch gekennzeichnet**, daß die Anfahrkupplung geöffnet wird, wenn im Schubbetrieb ein Betrag einer Differenzgeschwindigkeit (Dv(t)) zwischen einer Geschwindigkeit (vref(t)) einer nicht angetriebenen Achse und der an einer angetriebenen Achse erfaßten Fahrgeschwindigkeit (v(t)) einen zulässigen Differenzgeschwindigkeitswert (Dvzul(SK(t))) überschreitet.

26. Verfahren nach wenigstens einem der vorangehenden Ansprüche 1 bis 20, **dadurch** **gekennzeichnet**, daß eine eingeprägte Kennlinie (WSK(SK(t))) eines dem stufenlosen Getriebe vorgeschalteten steuerbaren Drehmomentwandlers entsprechend dem vor dem Anfahrvorgang oder vor dem Anhalten des Kraftfahrzeugs ermittelten Wert der Fahraktivität (SK(t)) ausgewählt und zumindest beim Anfahrvorgang mit wachsender Fahraktivität (SK(t)) weicher eingestellt wird.

27. Verfahren nach wenigstens einem der vorangehenden Ansprüche, **dadurch gekennzeichnet**, daß ein Wert der Übersetzung (ue(t)) bei einem Anfahrvorgang entsprechend dem vor dem Anfahrvorgang oder vor dem Anhalten des Kraftfahrzeugs ermittelten Wert der Fahraktivität (SK(t)) eingestellt und mit wachsender Fahraktivität (SK(t)) zu größeren Werten hin verschoben wird.

28. Verfahren nach wenigstens einem der vorangehenden Ansprüche 25 bis 27, **dadurch** **gekennzeichnet**, daß Schaltgrenzen (wuko(SK(t)), wuks(SK(t))), bei denen eine schaltbare Wandlerüberbrückungskupplung zur Überbrückung des Drehmomentwandlers geöffnet (wuko(SK(t))) oder geschlossen (wuks(SK(t))) wird, wenigstens von der Fahraktivität abhängig sind und mit wachsenden, mehr leistungsorientierten Werten der Fahraktivität zu niedrigeren Werten der Motordrehzahl (nmot) hin verschoben werden.

29. Verfahren nach wenigstens einem der vorangehenden Ansprüche, **dadurch gekennzeichnet**, daß die augenblicklich eingestellte Übersetzung (ue) des Getriebes verkleinert wird, wenn der Betrag der Differenzgeschwindigkeit (Dv(t)) zwischen der Geschwindigkeit (vref(t)) einer nicht angetriebenen Achse und der an einer angetriebenen Achse erfaßten Fahrgeschwindigkeit (v(t)) den zulässigen Differenzgeschwindigkeitswert (Dvzul(SK(t))) überschreitet.

30. Verfahren nach wenigstens einem der vorangehenden Ansprüche, **dadurch gekennzeichnet**, daß bei Überschreiten des zulässigen Differenzgeschwindigkeitswerts (Dvzul(SK(t)))
- die Wandlerüberbrückungskupplung eines mit einem Drehmomentwandler ausgestatteten Getriebes geöffnet,
- eine Haltezeit (Th(SK(t))) gesetzt wird, während der eine Verkleinerung der Übersetzung nicht unterbunden werden kann und
- eine Vergrößerung der Übersetzung verhindert wird,
wobei diese Funktionen wieder zurückgesetzt werden, wenn sowohl Zugbetrieb erkannt wird, als auch positive Werte der Änderung der Fahrgeschwindigkeit (v(t)) vorliegen, als auch der Betrag der Differenzgeschwindigkeit (|Dv(t)|) kleiner als der zulässige Differenzgeschwindigkeitswert (Dvzul(SK(t))) ist.

31. Verfahren nach wenigstens einem der vorangehenden Ansprüche, **dadurch gekennzeichnet**, daß die Zeiträume (T1 (SK(t))), (T2(SK(t))), die Haltezeit (Th(SK(t))) und der zulässige Differenzgeschwindigkeitswert (Dvzul(SK(t))) von der Fahraktivität (SK(t)) abhängen, wobei die Zeiträume (T1(SK(t)) und T2(SK(t))) mit wachsender Fahraktivität (SK(t)) größer und die Haltezeit (Th(SK(t))) und der zulässige Differenzgeschwindigkeitswert (Dvzul(SK(t))) mit wachsender Fahraktivität SK(t) kleiner werden.

## Claims

1. Process for controlling a continuously variable gear (2), preferably actuated electrohydraulically, of a driven motor vehicle whereof the engine, in the form of an internal combustion engine (4), can be influenced by means of a power control member, the transmission ratio (ue) of the gear (2) being adjusted automatically, indirectly by way of at least one control characteristic curve (RKLj) at least in dependence on the position of the power control member (alpha(t)) and the engine speed (nmot(t)), and the control characteristic curve (RKLj) being selected from an array of a number of control characteristic curves (RKLj; j = 1, 2, ..., 5) in accordance with a driving activity (SK(t)) which evaluates the driving style of the driver or his behaviour, dependent on traffic situation, in relation to the control of the motor vehicle, and the control characteristic curves covering the area between a control characteristic curve (RKL1) enabling consumption-optimized operation of the motor vehicle and a control characteristic curve (RKL5) enabling performance-optimized operation of the motor vehicle, at least stepwise.

2. Process according to Claim 1, characterized in that the transmission ratio (ue) is set such that the engine speed (nmot(t)) follows an engine speed set value (nmots) which by way of the control characteristic curve (RKLj) is allocated to a present value of the position of the performance control member (alpha(t)).

3. Process according to Claim 2, characterized in that the control characteristic curves (RKLj) which allocate a particular engine speed set value (nmots) to a particular position of the performance control member (alpha) have, in a low value area of the position of the performance control member (alpha(t)), a progressive profile which in a central area of the position of the performance control member (alpha(t)) merges into a degressive profile.

4. Process according to Claim 1, 2 or 3, characterized in that the driving activity (SK(t)) is determined by a functional relationship (sliding average value formation) evaluating the driving style of the driver or his behaviour, dependent on traffic situation, over the longer term, from current and past values, detected cyclically or anticyclically, of a single operating parameter or of a variable combined to give a single variable from a plurality of operating parameters of a motor vehicle.

5. Process according to Claim 1, 2, 3 or 4, characterized in that the evaluation of the driving style of the driver or his behaviour, dependent on traffic situation, is interrupted in defined operating states of the motor vehicle.

6. Process according to Claim 5, characterized in that a first operating state occurs when the motor vehicle stops and the internal combustion engine is running, wherein on occurrence of the first operating state the present value of driving activity (SK(t)) at least for the period during which the first operating state occurs, is stored and the evaluation is continued, following this period, starting with the stored value of driving activity.

7. Process according to Claim 5 or 6, characterized in that a second operating state occurs when the motor vehicle is switched off, wherein on the occurrence of the second operating state the present value of driving activity (SK(t)), at least for the period during which the second operating state occurs, is stored and the evaluation is continued, following this period, starting with the stored value of driving activity.

8. Process according to at least one of the preceding claims, characterized in that the driving activity (SK(t)) can be reset to a basic value (minimum value SKmin) by a key switch which is to be actuated manually.

9. Process according to at least one of the preceding Claims 1 to 6 or 8, characterized in that a third operating state occurs when the motor vehicle is switched off, wherein on the occurrence of the third operating state the present value of driving activity (SK(t)) is reset automatically to the basic value (minimum value SKmin).

10. Process according to at least one of the preceding claims, characterized in that the driving activity (SK(t)), without interruption to the evaluation of the driving style of the driver or his behaviour, dependent on traffic situation, is temporarily set to a value (SKmax) selecting a control characteristic curve (RKL5) which enables performance-optimized operation of the motor vehicle, as soon as the time alteration in the position of the performance control member (dalpha/dt) exceeds a first (positive) limit value (alphagl) and provided the position of the performance control member (alpha(t)) has not yet fallen below a fixed value (afg).

11. Process according to at least one of Claims 1 to 10, characterized in that the transmission ratio of the gear (2) is kept fixed if a state of a transmission ratio fixing (usf) is active (usf = 1), wherein the state of transmission ratio fixing (usf) moves into the active state (usf = 1) when a time alteration (dalpha(t)/dt) of the position of the performance control member (alpha(t)) falls below a second (negative) limit value (-alphag2) and thrust operation is recognized, and the state of the transmission ratio fixing (usf) moves into the inactive state (usf = 0) once a first time period (T1(SK(t))) has elapsed if traction operation is recognized.

12. Process according to at least one of Claims 1 to 10, characterized in that the transmission ratio (ue) is adjusted at a first particular finite and relatively slow speed (ck1) to the value of transmission ratio (ue) which is provided at the present operating point of the motor vehicle (alpha(t), v(t), nmot(t), t) in the currently set control characteristic curve (RKLj), at least as long as the state of a transmission ratio fixing (usf) is active (usf = 1), wherein the state of the transmission ratio fixing moves into the active state (usf = 1) when the time alteration (dalpha(t)/dt) of the position of the performance control member (alpha(t)) falls below the second negative limit value (-alphag2) and thrust operation is recognized, and the state of the transmission ratio fixing (usf) moves into the inactive state (usf = 0) after a second time period (T2(SK(t))) has elapsed when traction operation is recognized.

13. Process according to at least one of the preceding claims, characterized in that thrust operation is recognized if the position of the performance control member (alpha(t)) falls below a limit characteristic curve (azsg(nmot)) dependent on engine speed.

14. Process according to at least one of the preceding claims, characterized in that traction operation is recognized if both the position of the performance control member (alpha(t)) exceeds the limit characteristic curve azsg(nmot) dependent on engine speed and the time alteration of the driving speed (dv(t)/dt) assumes positive values.

15. Process according to at least one of the preceding claims, characterized in that after deactivation of the transmission ratio fixing (usf = 1 -> usf = 0) in thrust operation the transmission ratio (ue(t)) is set with a particular adjustment speed from the value on transition to the thrust operation to the value of the transmission ratio (ue) which is closest or necessary for attaining the engine speed set value (nmots) predetermined by the currently selected control characteristic curve (RKLj) with the performance control member closed.

16. Process according to Claim 15, characterized in that the adjustment speed of the transmission ratio (due/dt) is determined by way of a characteristic field (FDUE(nmot, SK)) from the current values or values determined on transition to thrust operation of engine speed (nmot(t)) and driving activity (SK(t)).

17. Process according to at least one of Claims 1 to 14, characterized in that after deactivation of the transmission ratio fixing (usf = 1 -> usf = 0) in thrust operation the transmission ratio (ue(t)) is set in such a way that the engine speed (nmot(t)) is set at a particular adjustment speed from the value on transition to thrust operation to the engine speed set value (nmots) which is predetermined by the currently selected control characteristic curve (RKLj) with the performance control member closed.

18. Process according to Claim 17, characterized in that the adjustment speed of the engine speed (dnmot(t)/dt) is established by way of a characteristic field (FDNMOT) from the current values or values determined on transition to thrust operation of engine speed (nmot(t)) and driving activity (SK(t)).

19. Process according to Claim 17 or 18, characterized in that the adjustment speed of the engine speed (dnmot(t)/dt) is kept constant if the engine speed (nmot(t)) has reached the value of the engine speed set value (nmots) predetermined by the current control characteristic curve or that determined on transition to thrust operation, and the engine speed has not yet fallen below a limit value (nmotg(SK(t))).

20. Process according to Claim 19, characterized in that the currently set transmission ratio (ue(t)) is kept fixed if the engine speed (nmot(t)) falls below the limit value (nmotg(SK(t))) but has not yet reached the idling speed (nmotll).

21. Process according to at least one of the preceding claims, characterized in that a start-up characteristic curve (AFK(SK(t))), in accordance with which a start-up clutch (3) upstream of the continuously variable gear is controlled during a start-up procedure in dependence on at least the engine speed (nmot(t)), is selected from an array of a number of start-up characteristic curves (AFKi; i = 1, 2, ..., 5) in accordance with the value for driving activity (SK(t)) determined before the start-up procedure or before the motor vehicle has stopped.

22. Process according to Claim 21, characterized in that the pressure on the friction members of the start-up clutch (3) is set such that the speed difference (sak(t)), relative to the engine speed (nmot(t)), between the engine speed (nmot(t)) and the gear input speed (ne(t)) follows a set clutch slippage (saks(t)) allocated by way of the start-up characteristic curve (AFK(SK(t))) to a present value of the engine speed (nmot(t)).

23. Process according to Claim 22, characterized in that the start-up characteristic curves (AKF(SK(t))) allocate falling values of the set clutch slippage (saks) to rising values of the engine speed (nmot).

24. Process according to Claim 22 or 23, characterized in that the start-up characteristic curves (AFK(SK(t))) are offset towards higher values of the engine speed (nmot) as the values of driving activity (SK(t)) rise.

25. Process according to at least one of Claims 21 to 24, characterized in that the start-up clutch is opened if, in thrust operation, the amount of a differential speed (Dv(t)) between a speed (vref(t)) of an undriven axle and the driving speed (v(t)) detected at a driven axle exceeds a permissible differential speed value (Dvzul(SK(t))).

26. Process according to at least one of the preceding Claims 1 to 20, characterized in that an impressed characteristic curve (WSK(SK(t))) of a controllable torque converter upstream of the continuously variable gear is selected in accordance with the value for driving activity (SK(t)) which is determined before the start-up procedure or before the motor vehicle stops, and is set to be softer at least during the start-up procedure with rising driving activity (SK(t)).

27. Process according to at least one of the preceding claims, characterized in that a value for transmission ratio (ue(t)) is set during a start-up procedure in accordance with the value for driving activity (SK(t)) determined before the start-up procedure or before the motor vehicle stops and is offset towards larger values with rising driving activity (SK(t)).

28. Process according to at least one of the preceding Claims 25 to 27, characterized in that switch limits (wuko(SK(t)), wuks(SK(t))), at which a switchable converter bridge coupling for bridging the torque converter is opened (wuko(SK(t))) or closed (wuks(SK(t))), are dependent at least on the driving activity and are offset towards lower values of the engine speed (nmot) with rising, more performance-oriented values of driving activity.

29. Process according to at least one of the preceding claims, characterized in that the currently set transmission ratio (ue) of the gear is reduced if the amount of the differential speed (Dv(t)) between the speed (vref(t)) of an undriven axle and the driving speed (v(t)) detected at a driven axle exceeds the permissible differential speed value (Dvzul(SK(t))).

30. Process according to at least one of the preceding claims, characterized in that, when the permissible differential speed value (Dvzul(SK(t))) is exceeded,
- the converter bridging coupling of a gear equipped with a torque converter is opened,
- a holding time (Th(SK(t))) during which a reduction in the transmission ratio cannot be prevented is set, and
- an increase in the transmission ratio is prevented, these functions being reset again when both traction operation is recognized and positive values apply to the alteration in the driving speed (v(t)), and the amount of the differential speed (|Dv(t)|) is smaller than the permissible differential speed value (Dvzul(SK(t))).

31. Process according to at least one of the preceding claims, characterized in that the time periods (T1(SK(t))), (T2(SK(t))), the holding time (Th(SK(t))) and the permissible differential speed value (Dvzul(SK(t))) depend on the driving activity (SK(t)), the time periods (T1(SK(t)) and T2(SK(t))) becoming larger with rising driving activity (SK(t)) and the holding time (Th(SK(t))) and the permissible differential speed value (Dvzul(SK(t))) becoming smaller with rising driving activity SK(t).

## Revendications

1. Procédé de commande d'une transmission (2) à variation continue, de préférence à actionnement hydraulique, d'un véhicule automobile propulsé, dont le moteur, réalisé sous forme de moteur à combustion interne (4) peut être influencé au moyen d'un organe de commande de puissance, le rapport de transmission (ue) de la transmission (2) étant réglé automatiquement, indirectement, par l'intermédiaire d'au moins une courbe caractéristique de commande (RKLj), au moins en fonction de la position de l'organe de commande de puissance (alpha(t)) et de la vitesse de rotation moteur (nmot(t)), et la courbe caractéristique de commande (RKLj) étant sélectionnée de manière correspondant à un style de conduite du conducteur ou de son comportement lié à la situation du trafic, en référence à une activité de roulage (SK(t)) servant à évaluer la commande du véhicule automobile, depuis un lot de plusieurs courbes caractéristiques de commande (RKLj; j=1,2,...,5), les courbes caractéristiques de commande couvrant, au moins par étapes, la plage située entre une courbe caractéristique de commande (RKL1) permettant un fonctionnement à consommation optimisé du véhicule automobile et une courbe caractéristique de commande (RKL5) permettant le fonctionnement à puissance optimisé du véhicule automobile.

2. Procédé selon la revendication 1, caractérisé en ce que le rapport de transmission (ue) est réglé de telle façon que la vitesse de rotation moteur (nmot(t)) suit une valeur de consigne de vitesse de rotation moteur (nmots), affectée, par l'intermédiaire de la courbe caractéristique de commande (RKLj), à une valeur instantanée de la position de l'organe de commande de puissance (alpha(t)).

3. Procédé selon la revendication 2, caractérisé en ce que les courbes caractéristiques de commande (RKLj) affectant à une position déterminée de l'organe de commande de puissance (alpha) une valeur de consigne de vitesse de rotation moteur (nmots) déterminée, présentent dans une plage de valeurs inférieure de la position de l'organe de commande de puissance (alpha(t)) une allure progressive, allant en se transformant en une allure dégressive, dans une zone médiane de la position de l'organe de commande de puissance (alpha(t)).

4. Procédé selon la revendication 1, 2 ou 3, caractérisé en ce que l'activité de roulage (SK(t)) est déterminée au moyen d'un relation fonctionnelle exploitant à long terme (par formation de la valeur moyenne glissante) le style de conduite du conducteur ou son comportement lié à la situation de circulation, à partir de valeurs actuelles et passées, appréhendées de façon cyclique ou anticycliques, d'une grandeur caractéristique de fonctionnement unique ou d'une valeur unique composée à partir de plusieurs grandeurs caractéristiques de fonctionnement d'un véhicule automobile.

5. Procédé selon la revendication 1, 2, 3 ou 4, caractérisé en ce que l'évaluation du style de conduite du conducteur ou de son comportement lié à la situation de circulation est interrompue dans des états de fonctionnement définis du véhicule automobile.

6. Procédé selon la revendication 5, caractérisé en ce qu'un premier état de fonctionnement se produit lorsque le véhicule automobile s'arrête et que le moteur à combustion interne tourne, la valeur instantanée de l'activité de roulage (SKt)) qui se produit pendant la durée du premier état de fonctionnement étant stockée en mémoire lors de la survenance du premier état de fonctionnement et l'évaluation étant continuée suite à cette durée, en commençant avec la valeur d'activité de roulage lue en mémoire.

7. Procédé selon la revendication 5 ou 6, caractérisé en ce qu'un deuxième état de fonctionnement se produit lorsque le véhicule automobile est stoppé, la valeur instantanée de l'activité de roulage (SKt)) qui se produit au moins pendant la durée du deuxième état de fonctionnement étant stockée en mémoire lors de la survenance du deuxième état de fonctionnement et l'évaluation étant continuée suite à cette durée, en commençant avec la valeur d'activité de roulage lue en mémoire.

8. Procédé selon au moins l'une des revendications précédentes, caractérisé en ce que l'activité de roulage (SK(t)) peut être rétrogradée à une valeur de base (valeur minimale SKmin) par actionnement manuel sur un interrupteur à touche.

9. Procédé selon au moins l'une des revendications précédentes 1 à 6 ou 8, caractérisé en ce qu'un troisième état de fonctionnement se produit lorsque le véhicule automobile est stoppé, la valeur instantanée de l'activité de roulage (SKt)) qui se produit lors de la survenance du troisième état de fonctionnement étant rétrogradée automatiquement à la valeur de base (valeur minimale SKmin).

10. Procédé selon au moins l'une des revendications précédentes, caractérisé en ce que l'activité de roulage (SK(t)), sans interruption de l'évaluation du style de conduite du conducteur ou de son comportement lié à une situation de trafic, est posée provisoirement à une valeur (SKmax) sélectionnant une courbe caractéristique de commande (RKL5) permettant le fonctionnement optimisé en puissance du véhicule automobile, dès que la fluctuation dans le temps de la position de l'organe de commande de puissance (dalpha/dt) dépasse une première valeur limite (positive) (alphatg) et tant que la position de l'organe de commande de puissance (alpha(t)) n'a pas encore dépassé une valeur (afg) fixée.

11. Procédé selon au moins l'une des revendications 1 à 10, caractérisé en ce que le rapport de transmission de la transmission (2) est fixé, lorsqu'un état de fixation de rapport de transmission (ust) est actif (usf=1), l'état de fixation de rapport de transmission (usf) passant à l'état actif (usf=1), lorsqu'une fluctuation dans le temps (dalpha/dt) de la position de l'organe de commande de puissance (alpha(t)) descend au-dessous d'une deuxième valeur limite (négative) (alphag2), et qu'un fonctionnement en frein moteur est identifié, et l'état de fixation du rapport de transmission (usf) étant identifié, après écoulement d'une première durée (T1(SK(t)), passant à l'état inactif, lorsqu'un fonctionnement en traction est identifié.

12. Procédé selon au moins l'une des revendications 1 à 10, caractérisé en ce que le rapport de transmission (ue) est établi au moins tant qu'avec une première vitesse finale (ck1) déterminée et relativement lente, jusqu'à la valeur du rapport de transmission (ue) prévu au point de fonctionnement instantané du véhicule automobile (alpha(t), v(t), nmot(t), t), dans la courbe caractéristique de commande réglée à ce moment, l'état de fixation de rapport de transmission (usf) étant également actif (usf=1), l'état de fixation de rapport de transmission passant à l'état actif (usf=1), lorsque la fluctuation dans le temps (dalpha/dt) de la position de l'organe de commande de puissance (alpha(t)) descend au-dessous de la deuxième valeur limite négative (alphag2) et un fonctionnement en frein moteur étant identifié, l'état de fixation de rapport de transmission (usf) passant à l'état inactif (usf=0) après écoulement d'une deuxième durée (T2(SK(t)), lorsqu'un fonctionnement en traction est identifié.

13. Procédé selon au moins l'une des revendications précédentes, caractérisé en ce qu'un état en frein moteur est identifié lorsque la position de l'organe de commande de puissance (alpha(t)) descend au-dessous d'une courbe caractéristique limite (azsg/nmot) fonction de la vitesse de rotation du moteur.

14. Procédé selon au moins l'une des revendications précédentes, caractérisé en ce qu'un état de fonctionnement en traction est identifié lorsque tant la position de l'organe de commande de puissance (alpha(t)) dépasse la courbe caractéristique azsg(mot) fonction de la vitesse de rotation du moteur, qu'également la fluctuation dans le temps de la vitesse de roulage (dv(t)/dt prend une valeur positive.

15. Procédé selon au moins l'une des revendications précédentes, caractérisé en ce que, après désactivation de la fixation de rapport de transmission (usf=1 -> usf=0), en fonctionnement en frein moteur, on règle le rapport de transmission (ue(t)), avec une vitesse de réglage déterminée, à partir de la valeur existant lors du passage au fonctionnement en frein moteur, pour passer à la valeur la plus proche ou nécessaire du rapport de transmission (ue), pour atteindre la valeur de consigne de vitesse de rotation moteur (nmots) prédéterminée par la courbe caractéristique de commande (RKLj) choisie à ce moment, lorsque l'organe de commande de puissance est fermé.

16. Procédé selon la revendication 15, caractérisé en ce que la vitesse de réglage du rapport de transmission (due/dt) est déterminée par l'intermédiaire d'un champ de caractéristiques (FDUE(nmot, SK), à partir des valeurs instantanées ou déterminée au passage en fonctionnement en frein moteur, concernant la vitesse de rotation moteur (nmot(t)) et l'activité de roulage (SK(t)).

17. Procédé selon au moins l'une des revendications 1 à 14, caractérisé en ce que, après désactivation de la fixation de rapport de transmission (usf=1 -> usf=0), en fonctionnement en frein moteur, on règle le rapport de transmission (ue(t)), de manière que la vitesse de rotation moteur (nmot(t)) passe avec une vitesse de réglage déterminée, de la valeur rencontrée lors du passage en fonctionnement en frein moteur à celle rencontrée sur la courbe caractéristique de commande (RKLj) choisie à cet instant.

18. Procédé selon la revendication 17, caractérisé en ce que la vitesse de réglage de la vitesse de rotation moteur (dnmot(t)/dt) est déterminée par l'intermédiaire d'un champ de caractéristiques (FDNMOT), à partir des valeurs instantanées ou déterminées au passage au fonctionnement en frein moteur, de la vitesse de rotation moteur (nmot(t)) et de l'activité de roulage (SK(t)).

19. Procédé selon la revendication 17 ou 185, caractérisé en ce que la vitesse de réglage de la vitesse de rotation moteur (dnmot(t)/dt) est maintenue constante, tant que la vitesse de rotation moteur (nmot(t)) a atteint pour la valeur de consigne de vitesse de rotation moteur (nomts) la valeur prédéterminée par la courbe caractéristique de commande instantanée ou déterminée lors du passage au fonctionnement en frein moteur et que la vitesse de rotation moteur n'est pas encore descendue au-dessous d'une valeur limite (nmotg(SK(t)).

20. Procédé selon la revendication 19, caractérisé en ce que le rapport de transmission (ue(t) réglé à l'instant est fixé lorsque la vitesse de rotation moteur (nmot(t) descend au-dessous de la valeur limite (nmotg(SK(t)), mais n'a cependant pas atteint encore la vitesse de rotation à vide (nmotll).

21. Procédé selon au moins l'une des revendications précédentes, caractérisé en ce qu'une caractéristique de démarrage (AFK(SK(t))), selon laquelle un embrayage de démarrage (3), monté en amont de la transmission continue, est commandé en fonction d'au moins la vitesse de rotation moteur (nmot(t), lors d'un processus de démarrage, est sélectionnée depuis un lot de plusieurs courbes caractéristiques de démarrage (AFKi;i=1,2,...,5), de manière correspondant à la valeur de l'activité de roulage (SK(t)), déterminée avant le processus de démarrage ou avant l'arrêt du véhicule automobile.

22. Procédé selon la revendication 21, caractérisé en ce que la pression agissant sur les organes de frottement de l'embrayage de démarrage (3) est réglée de manière que la différence de vitesses de rotation (sak(t)), rapportée à la vitesse de rotation moteur (nmot(t)), entre la vitesse de rotation moteur (nmot(t) et la vitesse d'enclenchement de transmission (ne(t), est contrôlée pour valoir un glissement de consigne d'embrayage (saks(t), affecté à une valeur instantanée de la vitesse de rotation moteur (nmot(t), par l'intermédiaire de la courbe caractéristique de démarrage (AFK(SK(t))).

23. Procédé selon la revendication 22, caractérisé en ce que les courbes caractéristiques de démarrage (AFK(SK(t))) affectent des valeurs croissantes de vitesse de rotation moteur (nmot) à des valeurs décroissantes du glissement de consigne d'embrayage (saks).

24. Procédé selon la revendication 22 ou 23, caractérisé en ce que lorsque les valeurs de l'activité de roulage (SK(t)) croissent, les courbes caractéristiques de démarrage (AFK(SK(t))) sont déplacées vers des valeurs plus élevées de la vitesse de rotation moteur (nmot).

25. Procédé selon au moins l'une des revendication 21 à 24, caractérisé en ce que l'embrayage de démarrage est ouvert lorsque, en fonctionnement en frein moteur, la valeur de la vitesse différentielle (Dv(t)) entre une vitesse (vref(t) d'un essieu non entraîné et la vitesse de roulement (v(t)) appréhendée sur un essieu entraîne dépasse une valeur admissible de la vitesse différentielle (Dvzu(SK(t))).

26. Procédé selon au moins l'une des revendications précédentes 1 à 20, caractérisé en ce qu'une caractéristique accentuée (WSK(SK(t))) d'un convertisseur de couple pouvant être commandé et mis en circuit en amont de la transmission continue est sélectionnée, en fonction de la valeur d'activité de roulage (SK(t)), déterminée avant le processus de démarrage ou avant l'arrêt du véhicule automobile, et réglée à un niveau plus souple, au moins lors du processus de démarrage, lorsque l'activité de roulage (SK(t)) augmente

27. Procédé selon au moins l'une des revendications précédentes, caractérisé en ce qu'une valeur de rapport de transmission (ue(t) est réglée, lors d'un processus de démarrage, en fonction de la valeur d'activité de roulage (SK(t) déterminée avant le processus de démarrage ou avant arrêt du véhicule automobile et est déplacé vers des valeurs plus élevées lorsque l'activité de roulage (SK(t)) augmente.

28. Procédé selon au moins l'une des revendications précédentes 25 à 27, caractérisé en ce que les limites de commutation (wuko(SK(t)), wuks(SK(t))), pour lesquelles un embrayage de pontage de convertisseur commutable, destiné à ponter le convertisseur de couple est ouvert (wuko(SK(t))) ou fermé (wuks(SK(t)), sont déplacées, an moins en fonction de l'activité de roulage et vers des valeurs d'activité de roulage croissantes, orientées avec plus de puissance, vers des valeurs inférieures de la vitesse de rotation moteur (nmot).

29. Procédé selon au moins l'une des revendications précédentes, caractérisé en ce que le rapport de transmission (ue) réglé instantané de la transmission est diminué lorsque la valeur de la vitesse différentielle (Dv(t)) entre la vitesse (vref(t)) d'un essieu non entraîné et de la vitesse de roulage (v(t))) appréhendée sur un essieu entraîné dépasse la valeur admissible pour la vitesse différentielle (Dvzu(SK(t))).

30. Procédé selon au moins l'une des revendications précédentes, caractérisé en ce que, en cas de dépassement de la valeur admissible de la vitesse différentielle (Dvzu(SK(t))) :
- un temps d'arrêt (Th(SK(t))) est marqué, pendant lequel un diminution du rapport de transmission ne peut être cessée, et
- une augmentation du rapport de transmission est empêchée;
ces fonctions étant ramenées à leur état initial lorsque tant un fonctionnement en propulsion est identifié, qu'également des valeurs positives de fluctuation de la vitesse de roulage (v(t)) se présentent, qu'également la valeur de la vitesse différentielle (|Dv(t)|) est inférieure à la valeur admissible de la vitesse différentielle (Dvzu(SK(t))).

31. Procédé selon au moins l'une des revendications précédentes, caractérisé en ce que les intervalles de temps (T1(SK(t))), (T2(SK(t))), le temps de maintien (Th(SK(t))) et la valeur admissible de la vitesse différentielle (Dvzu(SK(t))) dépendent de l'activité de roulage (SK(t)), les intervalles de temps (T1(SK(t))) et (T2(SK(t))) augmentant lorsque l'activité de roulage augmente et le temps de maintien (Th(SK(t))) et la valeur admissible de la vitesse différentielle (Dvzu(SK(t))) diminuant lorsque l'activité de roulage (SK(t)) diminue.
